# EUROPEAN PATENT APPLICATION

(11) **EP 4 174 196 A1**
(43) Date of publication of application: **03.05.2023**
(21) Application number: 22204905.8
(22) Date of filing: 01.11.2022
(51) Int. Cl.: C22B 3/10, C22B 7/00, C22B 11/00, C22B 11/06

(54) **PROCESS OF RECOVERY OF CRITICAL METALS FROM ELECTROCHEMICAL STACK DEVICES**

(30) Priority: 01.11.2021 GR 20210100765
(71) Applicant: MONOLITHOS Catalysts & Recycling Ltd., 11476 Athens (GR)
(72) Inventor: Moschovi, Anastasia Maria, Athens (GR); Yakoumis, Iakovos, Athens (GR); Polyzou, Ekaterini, Athens (GR); Sofianou, Anthi Maria, Athens (GR); Papagianni, Sotiria, Athens (GR)
(74) Representative: Kouzelis, Dimitrios

(57) **Abstract**

The present disclosure relates to a process for recovering metals, in particular critical metals, from electrochemical stack devices. The process comprises the steps of applying a single step hydrometallurgical method, said method comprising the mixing of the electrochemical stack device with an acidic aqueous solution containing H₂O₂ as an oxidizing agent and a chloride salt, applying heat to the mixture thereby causing a reaction to form metal chloride ions/complexes and separating the metal chloride ions/complexes containing leachate from solid residues by filtration.

## Description

### TECHNICAL FIELD

The present disclosure relates to a process for recovering metals, in particular critical metals, from electrochemical stack devices. The present disclosure belongs to the field of electrochemical energy conversion and storage systems.

### BACKGROUND

It is generally known that critical metals' extraction from primary sources (minerals and ores) are their low concentration, the high cost of the production process (complicated extraction and processing process) and the high environmental footprint. Hydrothermal and hydro-pyrometallurgical methods are commonly used to recover critical metals from electrochemical stack devices, contributing to the ever-increasing burden on the environment (high energy consumption, high operating temperatures, release of dangerous gases). Even though research efforts for critical metals recovery from electrochemical devices via hydrometallurgical methods have been performed, a successful commercial process has not emerged for the time being.

In conventional hydrometallurgical process for recovering platinum (Pt) from catalysts contained in proton exchange polymer electrolyte membrane - electrode assemblies of fuel cells, (as described for example in publication of L. Duclos, L. Svecova, V. Laforest, G. Mandil, P.-X. Thivel, Process development and optimization for platinum recovery from PEM fuel cell catalyst, Hydrometallurgy 160 (2016) 79-89*)* , two oxidizing solvents H₂O₂/HCl (3 vol%) and HNO₃/HCl (5 vol%) were used. High recovery yields were found for Pt, resulting in a high recovery yield for Pt (90-93%) at 25°C for 24h. However, hydrometallurgical methods that have been presented in the literature suffer from high amounts of strongly acidic solutions, harmful chemicals, and long reaction time to achieve high recovery yields.

WO 2018138427 A1 describes a process for platinum (Pt) and cobalt (Co) recovery from catalysts of proton exchange membrane - electrode assemblies (polymer electrolyte membrane fuel cells) which involves at least three distinct steps: a) treating the assembly using a BrØnsted acid/oxidizing agent leaching mixture (halogenated acid/hydrogen peroxide), b) extraction of metal ions from the leachate (liquid-liquid extraction or resin extraction) and c) separation of Pt and Co ions to form and precipitate Co oxides. The above multi-step process includes a direct leaching step of Pt and Co from membrane electrode assemblies, using a concentrated acid (9-12M) to recover Co oxide in the form of solid from the extraction solution.

US 20060147791 A1 discloses a method and an apparatus for Pt recovery from catalysts of polymer electrolyte fuel cell stack without disassembly. The method involves inflowing an oxidizing acidic solution (at least one strong acid and one oxidizing medium or aqua regia) into one or more ports of the stack from 5min to 1h. The method may contain a step of precipitating to collect the Pt salt from the solution, and a calcination step.

Since the electrochemical stack devices market grows rapidly, high amounts of critical metals are required. This results in a growing gap between the supply and demand of these materials, making recycling crucial for the sustainability of a circular economy.

### SUMMARY

In this context, it is desirable to provide a process for recovering critical metals that would be beneficial for the environment while it would ensure a proper balance between cost and efficiency of the reaction. The present disclosure therefore provides a process for recovering critical metals from electrochemical stack devices via an environmentally friendly, low cost and fast hydrometallurgical method to form metal chloride ions/complexes. The recovery is performed in a single step, either without any pre-processing or after mechanical pre-processing of the electrochemical devices. This process targets in the efficient recovery and reuse of critical metals contained in electrochemical devices without waste product formation. In the context of the present disclosure, the terminology "single-step" has to be interpreted in relation to the process of extraction of the critical metals. In detail, and according to the present disclosure the extraction of critical metals is carried out by using a single acidic aqueous solution, i.e., hydrochloric acid, preferably without the necessity of any prior treatment of the electrochemical stack devices. The single step therefore comprises the mixing of the liquids, more specifically of the acidic aqueous solution, oxidizing agent, chloride salt with the solids and the subsequent heating of the mixture. The skilled person should directly and unambiguously understand that "solids" refer to the electrochemical stack or parts of the electrochemical stack devices which may be components that cannot be dissolved by the solvent, therefore insoluble, such as but not limited to stainless steel or carbon cloth. Such process is also well known in the art as leaching process.

According to aspects of the present disclosure a process of recovering critical metals from electrochemical stack devices is provided. The process comprises the steps of applying a single step hydrometallurgical method, said method comprising the mixing of the electrochemical stack device with an acidic aqueous solution containing H₂O₂ as an oxidizing agent and a chloride salt, applying heat to the mixture thereby causing a reaction to form metal chloride ions/complexes and separating the metal chloride ions/complexes containing leachate from solid residues by filtration.

According to aspects of the disclosure, the concentration of the acidic aqueous solution is ≤4M.

According to aspects of the disclosure the content of the H₂O₂ is ≤1% v/v and the concentration of the chloride salt is <5M.

According to aspects of the present disclosure the solid to liquid ratio is between 10-70% w/v, in particular between 40-70%.

According to aspects of the disclosure the electrochemical stack devices are mechanically and/or chemically and/or thermally pre-treated, prior to the application of the hydrometallurgical method.

According to aspects of the disclosure, the electrochemical devices comprise electrolyte - electrode assemblies.

According to aspects of the disclosure, the electrolyte - electrode assemblies are separated into their individual components by mechanical or chemical treatment using an organic solvent or a combination of the above, prior to the application of the single step hydrometallurgical method.

According to aspects of the disclosure the process comprises the step of mixing or/ and shaking of the electrolyte-electrode assemblies into an organic solvent(s), prior to the application of the single step hydrometallurgical method, thereby separating them into individual components.

According to aspects of the present disclosure the reaction is taking place at a temperature up to 80°C.

According to aspects of the disclosure the leachate that contains the metal chloride ions/complexes is analyzed via a chemical analysis method for the determination of the critical metals content.

### BRIEF DESCRIPTION OF THE DRAWINGS

The disclosure thereof will be better understood upon reading the detailed description which follows, of embodiments given as non-limiting examples. This description refers to the appended drawing, wherein:

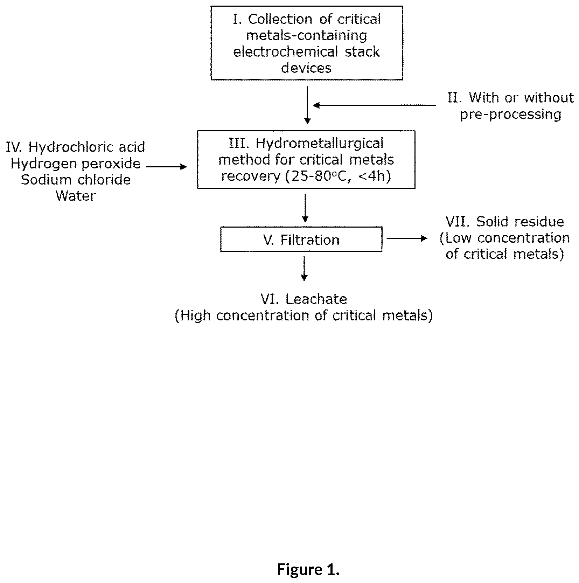

- Figure 1 is a schematic representation of the steps for critical metals recovery from electrochemical stack devices via hydrometallurgical process.

### DETAILED DESCRIPTION

Embodiments of a process of recovering critical metals according to aspects of the disclosure will be described with reference to Figure 1.

The term "exemplary" is used in the sense of "example," rather than "ideal." While aspects of the disclosure are amenable to various modifications and alternative forms, specifics thereof have been shown by way of example in the drawings and will be described in detail. It should be understood, however, that the intention is not to limit aspects of the disclosure to the particular embodiment(s) described. On the contrary, the intention of this disclosure is to cover all modifications, equivalents, and alternatives falling within the scope of the disclosure.

Throughout the description, including the claims, the terms "comprising a," "including a," and "having a" should be understood as being synonymous with "comprising one or more," "including one or more," and "having one or more" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially," "approximately," and "generally" should be understood to mean falling within such accepted tolerances.

The present disclosure provides a process for recovering critical materials (metals) from electrochemical stack devices via a low-cost, fast and environmentally friendly hydrometallurgical process. The recovery is performed in a single-step and results in the formation of metal chloride ions/complexes.

The metal to be recovered may be any metal that can be commonly considered as a precious metal. The list which should be interpreted with a non-limiting sense may include gold, silver, platinum, palladium, rhodium, iridium, or other transition metals and rare earth metals and the like. The rare earth metals may include Nd, Sm, Sc, Y, Dy, Pr, Tb, La, Ce, Gd and others, according to the general periodic table group.

Figure 1 shows an overview of various steps that the process of critical metals recovery may comprise. These could be summarized as follows:
I. Collection of critical metals-containing electrochemical stack devices
II. With or without pre-processing
III. Hydrometallurgical method for critical metals recovery (25-80°C, <4h)
IV. Hydrochloric acid, Hydrogen peroxide, Sodium chloride, Water
V. Filtration
VI. Leachate (High concentration of critical metals)
VII. Solid residue (Low concentration of critical metals)

In detail, electrochemical stack devices are collected (I) and are fed into a reactor either directly, or after mechanical pre-processing (II) (e.g., separation into their individual components) as it will be described later in this specification. For metals recovery, the single-step hydrometallurgical method (III) is used to dissolve the critical metals from the solids. Afterwards, the solid phase (solid residue) (VII) is separated from the liquid phase (leachate) (VI) by filtration (V) using filter (eg. paper) of the suspension or slurry.

In embodiments, the electrochemical stack devices are used without any pre-processing (II) (as for example disassembly, chemical oxidation, combustion, etc.) before applying the hydrometallurgical recovery process. In the context of the present disclosure a single-step hydrometallurgical method (III) is followed in an acidic aqueous solution (IV). In detail, such hydrometallurgical method comprises the addition of an acidic aqueous solution (IV), an oxidizing agent (IV), and chloride salt (IV) and heating up to 80°C (III) for metals recovery from the solids to the leachate solution (VI). More details about a single step hydrometallurgical method are described in the publication of Yakoumis, A. Moschovi, M. Panou, D. Panias, Single-Step Hydrometallurgical Method for the Platinum Group Metals Leaching from Commercial Spent Automotive Catalysts, Journal of Sustainable Metallurgy 6 (2020) 259-268*,* its content being herein incorporated at its entirety.

The process comprises the step of using H₂O₂ as an oxidizing agent and a chloride salt (IV). In a specific example, the content of the H₂O₂ is ≤1% v/v and the concentration of the chloride salt is <5M. Further, the solid to liquid ratio is between 10-70% w/v, while in a more specific example between 40-70% and in a most specific example 60%. Upon the addition of the oxidizing agent and of the chloride salt (IV), heat is applied to form metal ions/complexes through a reaction that is carried out, preferably at temperatures that are below 80°C (III). Any suitable external source of energy may be used for the application of heat, such as electric current, or any heat recovery by other processes may be integrated for energy saving purposes. The reaction in such relatively low temperature is beneficiary since it provides low energy consumption and mitigates the production of dangerous toxic wastes.

In examples, the concentration of the acidic aqueous solution (IV) is ≤4M ("M" should be interpreted as Molarity, which is a well-known unit measurement in the art for concentration)

In an embodiment therefore, critical materials (metals) recovery is performed in a low-concentration acidic aqueous environment (≤4M), in the presence of an oxidizing agent (≤1% v/v) and a chloride salt (<5 M) (IV). The reaction is carried out at temperatures below or equal 80°C (III), thus resulting in low energy consumption in the process. A single step hydrometallurgical method (III) as described in the disclosure herein has been successfully used for the recovery of platinum (Pt), palladium (Pd) and rhodium (Rh) from end-of-life automotive catalytic converters.

In examples, an electrochemical stack device, used in fuel cells, water electrolyzers, CO₂ electrolyzers, flow batteries or similar devices, may be composed of the following main components: the electrolyte with the electrode (membrane-electrodes assemblies (MEA)) and the bipolar plates. It is common that electrodes and bipolar plates to contain significant amounts of critical materials.

In examples, the electrochemical stack devices are mechanically and/or chemically and/or thermally pre-treated (II), prior to the application of the hydrometallurgical method (III). The electrochemical device/cell/stack can thus be disassembled into its individual components by such mechanical and/or chemical methods (II). In examples, the mechanical methods may comprise partial loosening of stack joints (bolts) or/ and decompression or complete bolts removal and disassembling, while the chemical methods may comprise delamination via organic solvent(s) such as alcohol or/ and ketone or/ and aldehydes.

In embodiments, the electrochemical devices comprise electrolyte - electrode assemblies. An example of electrolyte - electrodes separation in a low-temperature proton exchange membrane (or polymer electrolyte membrane) electrode assembly may comprise mixing or/ and shaking (stirring, ultrasonication, etc.) of the assembly into an organic solvent (for example ethanol, or/ and propanol or/ and acetone.), to facilitate the detachment of the membrane (fluorinated polymer) from the metals-containing electrodes that comprise the catalyst powder, thereby separating the electrochemical devices into individual components. Such process according to the described example will lead to an increase in the surface of the catalyst powder that comes in contact with the leaching solution during the hydrometallurgical method. Catalyst powder is collected after the solvent's evaporation. The solvent(s) can be recycled for reuse.

Critical materials recovery from electrochemical devices therefore, involves the contact of an inorganic acid, such as hydrochloric acid (IV), with the metal-rich solid, aiming for their dissolution. From the above process, two phases are obtained: the solid phase (solid residue-insoluble components) (VII), and the liquid phase (VI), which is rich in critical materials that can be dissolved under specific conditions, for example metal chloride ions or complexes in case that hydrochloric acid is used.

Low concentration of the acid, short reaction time (<4h) (III) and high solid (rich in critical metals)-to-liquids (solvents) ratio, (10-70% w/v, more specifically 40-70%, most specifically 60%), contribute to the development of an innovative process for the recovery of critical metals from electrochemical stack devices. This method has been successfully applied for the recovery of critical metals from the electrodes of low-temperature polymer electrolyte membrane electrochemical devices (exhibiting rates greater than 99%) revealing the potential for commercial exploitation.

In embodiments, the recovery of critical materials from electrochemical stack devices is achieved by a low-concentration acidic aqueous solution (IV), which contains an inorganic acid (e.g., hydrochloric acid, HCl), an oxidizing agent (e.g., hydrogen peroxide, H₂O₂) and a chloride salt (e.g., sodium chloride, NaCl) (IV) that potentially be reusable contributing to the sustainability of the circular economy. In examples, the concentration of the acid may be ranged from 2 M to 4 M, while the concentration of the chloride salt may be <5 M. The oxidizing agent is used in the content of ≤1% v/v, while the solid-to-liquid ratio can be ranged from 40 to 70% w/v. The reaction temperature should be below 80°C (III), preferably between 25 °C and 80 °C while the reaction time is <4 h (III).

In embodiments, the resulting leachate (VI) from the recovery of the critical materials from the electrochemical stack devices is qualitatively analyzed by means of chemical analysis methods (e.g., Inductively Coupled Plasma-ICP) to determine the critical metals concentration in the leachate and thus, define the selection of individual components (MEAs (membrane electrode assembly) or full stacks) for input in the process. In this way, one can take advantage of the variation in metals content of various electrochemical devices.

### Inorganic acid (Hydrochloric acid)

In examples, a BrØnsted-acid with a high boiling point and low volatility is used as an acidic medium for example hydrochloric acid or similar, which constitutes a low-cost acidic solution. The aqueous solution of the hydrochloric acid is used on relatively low concentrations between 2 M to 4 M.

### Oxidizing agent (Hydrogen peroxide)

In examples, the oxidizing agent used is a chemical compound that has low-cost and toxicity. The content of the solution is ≤1% v/v. H₂O₂ is added to the acidic aqueous solution and their fully mixing results in a highly exothermic reaction. The obtained mixture is suitable for the solubilization of the metals from the electrocatalytic powder.

### Chloride salt (Sodium Chloride)

A low-cost and non-toxic salt for both human health and the environment is used as a chloride ions source. The chloride ions can contribute to stabilize metal ion complexes formation. The concentration of sodium chloride used may be <5 M.

High recovery rates of Pt (>99%) have been observed from electrodes, originated from low-temperature polymer electrolyte membrane electrolysis cells (proton conductor). The above efficiency was attributed to the effective reaction between the acid and oxidizing medium and the stabilization of the metal ions in the form of chloride ions/complexes. In addition, the low quantities of the solvents used, the low concentration of acid, the short reaction time and the low reaction temperature (≤80°C) (III) are crucial for high process efficiency, and the reduction of dangerous toxic wastes and energy consumption.

### Example of the process

In an example, the process of critical materials recovery from end-of-life electrochemical stack devices may comprise the collection of the proton exchange polymer electrolyte membrane - electrode assemblies and shaking of the membrane-electrode assemblies into alcohol to facilitate the detachment of the membrane from the metals-containing electrodes that comprise the catalyst powder. The recovery of the critical materials from the catalytic powder (electrodes) is performed using a single-step hydrometallurgical method (III) as disclosed in the publication of *Yakoumis, A. Moschovi, M. Panou, D. Panias, as previously mentioned in that specification.*

In an embodiment, where the recovery of the critical metals is from the electrodes of electrochemical stack devices, the membrane-electrode assemblies may be immerged into an alcoholic solution so as the catalyst that is embedded in the membrane of the MEA is detached. Once the membrane is detached, a catalytic powder (carbon based electrode and metal catalyst) is obtained by evaporation of the alcoholic solution that can be recovered and reused. As a next step, the rich in critical metals catalytic powder is initially mixed with the aqueous hydrochloric acid solution (IV). Next, H₂O₂ and then NaCl and water are added to the above suspension or slurry (IV). The suspension/slurry is stirred at a constant temperature and for a specific time. After the end of the reaction time, the liquid phase (leachate (VI)), which contains the metal ions/complex in the form of chlorides, is separated from the solid phase (VII) by filtration (V) of the reaction suspension/slurry. The filtration may be carried out with any suitable means, for example with a filter paper, thereby resulting in an effective separation of the insoluble solids from the liquid. The resulting leachate (VI) could be properly processed (enrichment, separation, precipitation) in order to recover and reuse the critical metals.

Indicative experimental conditions of the critical materials' recovery from electrodes of proton exchange polymer electrolyte membrane - electrodes assemblies, following the herein described hydrometallurgical process leads to the high recovery rates of Pt (>99%) in short reaction time (<4h) (III), even without the demand of chemical or thermal pre-treatment (II) of the catalytic powder before the recovery. Especially, a low-concentrated HCl solution (<4 M) is preferably used (IV), and the reaction is performed at a low reaction temperature (≤80°C) (III) and at a liquid-to-solid ratio (10-70%, more preferably 40-70% and most preferably at 60%).

According to the above experimental results, the proposed recovery process has a vital role in the transition efforts to a sustainable circular economy since it is a low cost and environmentally friendly process.

Although the present disclosure refers to specific exemplary embodiments, modifications may be provided to these examples without departing from the general scope of the disclosure as defined by the following claims. In particular, individual characteristics of the different illustrated/mentioned embodiments may be combined in additional embodiments. Therefore, the description and the drawings should be considered in an illustrative rather than in a restrictive sense

## Claims

1. Process of recovering critical metals from electrochemical stack devices comprising applying a single-step hydrometallurgical method, said method comprising
- mixing the electrochemical stack device with an acidic aqueous solution containing H₂O₂ as an oxidizing agent and a chloride salt.
- applying heat to the mixture thereby causing a reaction to form metal chloride ions/complexes and
- separating the metal chloride ions/complexes containing leachate from solid residues by filtration.

2. Process for critical metals recovery from electrochemical stack devices according to claim 1 wherein the concentration of the acidic aqueous solution is ≤4M.

3. Process for critical metals recovery from electrochemical stack devices according to claims 1 or 2 wherein the content of the H₂O₂ is ≤1% v/v and the concentration of the chloride salt is <5M.

4. Process for critical metals recovery from electrochemical stack devices according to any of the preceding claims wherein the solid to liquid ratio is between 10-70% w/v.

5. Process for critical metals recovery from electrochemical stack devices according to any of the preceding claims, wherein the electrochemical stack devices are mechanically and/or chemically and/or thermally pre-treated, prior to the application of the hydrometallurgical method.

6. Process for critical metals recovery from electrochemical stack devices according to any of the preceding claims, wherein the electrochemical stack devices comprise electrolyte - electrode assemblies.

7. Process for critical metals recovery from electrochemical stack devices according to claim 6, when dependent on claim 5, wherein electrolyte - electrode assemblies are separated into their individual components by mechanical or chemical treatment using an organic solvent or a combination of the above, prior to the application of the single step hydrometallurgical method.

8. Process for critical metals recovery from electrochemical stack devices according to claim 7, comprising the step of mixing or/ and shaking of the electrolyte-electrode assemblies into organic solvent, prior to the application of the single step hydrometallurgical method, thereby separating them into individual components.

9. Process of recovering critical metals according to any of the preceding claims wherein the reaction is taking place at a temperature that is below 80°C.

10. Process for critical metals recovery according to any of the preceding claims wherein the leachate that contains the metal chloride ions/complexes is analyzed via a chemical analysis method for the determination of the concentration of the critical metals.
